# EUROPEAN PATENT APPLICATION

(11) **EP 1 804 047 A2**
(43) Date of publication of application: **04.07.2007**
(21) Application number: 06256605.4
(22) Date of filing: 28.12.2006
(51) Int. Cl.: G01N 1/31, G01N 1/06

(54) **Method and apparatus for preparing tissue specimens on miscroscope slides**

(30) Priority: 28.12.2005 JP 2005377721
(71) Applicant: SEIKO INSTRUMENTS INC., Chiba-shi, Chiba (JP)
(72) Inventor: Miyatani, Tatsuya, Mihama-ku Chiba-shi, Chiba (JP); Ito, Tetsumasa, Mihama-ku Chiba-shi, Chiba (JP); Nakano, Eiji, Mihama-ku Chiba-shi, Chiba (JP); Fujiwara, Hirohito, Mihama-ku Chiba-shi, Chiba (JP)
(74) Representative: Cloughley, Peter Andrew

(57) **Abstract**

Automatic instrument for fabricating prepared slide of tissue section including a store house (2) for storing a plurality of embedded blocks embedded (B) with a living body sample (S) by an embedding medium, cutting means (3) for cutting out a section (B1) by cutting the embedded block by a predetermined thickness, first carrying means (4) for putting in and out a selected one of the embedded block to and from the store house (2) and carrying the selected one of the embedded block to a position of being cut by the cutting means, second carrying means (7) for carrying the section to a storage tank (5) stored with a liquid to be floated on a liquid surface, transcribing means (8) for fabricating a prepared slide by transcribing the section floated on the liquid surface onto a base plate, and a control portion (9) for controlling the first carrying means to cut out a necessary number of the sections from the embedded block, thereafter, return the embedded block to the store house, and take out a successively selected one of the embedded block from the store house to be carried to the cut position.

## Description

The present invention relates to an automatic instrument for fabricating a prepared slide of tissue section and an automatic prepared slide fabricating method for automatically fabricating a prepared slide used in a scientific experiment or microscopic observation.

In a related art, a microtome is generally known as an apparatus of fabricating a prepared slide used in a scientific experiment or microscopic observation. The prepared slide is constituted by fixing a section having a thickness of several µm (for example, 3 µm through 5 µm) onto a base plate of slide glass or the like. Here, an explanation will be given of a general method of fabricating a prepared slide by utilizing a microtome.

First, an embedded block in a block state is fabricated by subjecting a living body sample of a living thing, an animal or the like fixed by formalin to paraffin substitution, thereafter, further hardening a surrounding thereof by paraffin to be solid. Next, rough machining is carried out by setting the embedded block to a microtome constituting an exclusive sectioning apparatus. By the rough machining, a surface of the embedded block becomes a smooth face and there is brought about a state of exposing the embedded living body sample constituting an object of experiment or observation at the surface.

After finishing the rough machining, regular machining is carried out. This is a step of sectioning the embedded block to be extremely thin to the above-described thickness by a cutting blade provided to the microtome. Thereby, the section can be provided. At this occasion, by sectioning the embedded block as thin as possible, the thickness of the section can be made to be proximate to a thickness of cell level and therefore, further accurate observation data can be provided. Therefore, it is requested to fabricate the section having a thickness as thin as possible. Further, the regular cutting is continuously carried out until providing a necessary number of sheets of the sections.

Next, there is carried out an elongating step of elongating the section provided by the regular machining. That is, the section fabricated by the regular machining is brought into a wrinkled state or a rounded state (for example, U-like shape) since the section is sliced to the extremely thin thickness as described above. Hence, it is necessary to elongate the section by removing wrinkle or roundness by the elongating step.

Generally, the section is elongated by utilizing water and hot water. First, the section provided by the regular machining is floated on water. Thereby, large wrinkle or roundness of the section can be removed while preventing portions of paraffin enveloping the living body sample from being stuck. Thereafter, the section is floated on hot water. Thereby, the section is easy to be elongated and therefore, remaining wrinkle or roundness which cannot be removed by being elongated by water can be removed.

Further, the section finished with the elongation by hot water is scooped by a base plate of slide glass or the like to be mounted on the base plate. Further, when the elongation is insufficient assumedly at the time point, the section is mounted on a hot plate or the like along with the base plate and is heated further. Thereby, the section can further be elongated.

Finally, the base plate mounted with the section is put into a dehydrator to be dried. By the drying, moisture adhered by the elongation is evaporated and the section is fixed onto the base plate. As a result, the prepared slide can be fabricated.

The prepared slide fabricated in this way is used in a biological or medical field. In recent years, there is increased needs of observing expression of gene or protein comprehensively and histologically by progress of genome science starting from a method of diagnosing normality/abnormality of a tissue from a shape of a cell which has been carried out in a relatedart. Therefore, it is necessary to fabricate more and more prepared slides efficiently. However, almost all of the steps of the related art require high degree of technology or experience and therefore, the steps can be dealt with only by manual operation of a skilled operator to thereby take time and labor.

Hence, in order to resolve such a drawback even by a small degree, there is provided an instrument for fabricating a prepared slide of tissue section for automatically carrying out a portion of the steps (refer to, for example, Patent Reference 1).

According to the instrument for fabricating a prepared slide of tissue section, a step of fabricating a section by cutting a set embedded block, a step of carrying the fabricated section by a carrier tape to be transcribed onto slide glass, and a step of elongating the section by carrying the section to an elongating apparatus along with the slide glass are carried out automatically.

According to the instrument for fabricating a prepared slide of tissue section, not only a burden of an operator can be alleviated but also a human error by the operator can be eliminated and an excellent prepared slide can be fabricated.
Patent Reference 1: JP-A-2004-28910

However, according to the instrument for fabricating a prepared slide of tissue section described in Patent Reference 1, the following problem still remains.

That is, although the instrument for fabricating a prepared slide of tissue section is an apparatus capable of fabricating the section from the previously set embedded block and fixing the section onto the slide glass in a state of finishing the elongation, normally, only several sheets (1 through 2 sheets) of the sections can be fabricated from one embedded block. On the other hand, with regard to the embedded block, in order to observe expression for all of main organs of animal constituting the object as described above, it is necessary to slice 20 pieces or more of the embedded blocks for one individual. Actually, it is general to increase a number of individuals of experiment in order to subject to a statistical processing, in that case, a number of the embedded blocks reaches several hundreds of pieces.

Therefore, even when the instrument for fabricating a prepared slide of tissue section described in Patent Reference 1 is used, it is necessary to frequently reset the embedded block manually. Therefore, as a result, the operator is troubled thereby, the burden on the operator and the human error cannot effectively be reduced.

The invention has been carried out in consideration of such a situation, and it is an object thereof to provide an automatic instrument for fabricating a prepared slide of tissue section and an automatic prepared slide fabricating method capable of alleviating a burden on an operator and capable of automatically fabricating a necessary number of sheets of prepared slides from respective embedded blocks while pertinently interchanging the respective embedded blocks.

The invention provides the following means in order to resolve the above-described problem.

According to the invention, there is provided an automatic instrument for fabricating a prepared slide of tissue section comprising a store house for storing a plurality of embedded blocks embedded with a living body sample by an embedding medium,cutting means for cutting out a section in a shape of a sheet by cutting the embedded block by a predetermined thickness, first carrying means capable of putting in and taking out a selected one of the plurality of stored embedded blocks to and from the store house and carrying the selected embedded block to a position for being cut by the cutting means, second carrying means for carrying the section to a storage tank stored with a liquid and floating the section on a liquid surface, transcribing means for fabricating a prepared slide by transcribing the section floated on the liquid surface onto a base plate, and a control portion for controlling the instrument to cut out a necessary number of the sections from the selected embedded block by the cutting means, therafter, return the selected embedded block to the store house, take out a successively selected one of the plurality of embedded blocks from the store house and carry the successively selected embedded block to the cutting position.

Further, according to the invention, there is provided an automatic section fabricating method which is an automatic prepared slide fabricating method for automatically fabricating a prepared slide by cutting out a section in a shape of a sheet from an embedded block embedded with a living body sample by an embedding medium and transcribing the section onto a base plate, the automatic prepared slide fabricating method comprising a first carrying step of taking out a selected one of a plurality of embedded blocks previously stored by a store house and carrying the selected embedded block to a cutting position, a cutting step of cutting out the section by cutting the selected embedded block carried to the cutting position by a predetermined thickness, a second carrying step for carrying the cut section to a storage tank stored with a liquid and floating the section on a liquid surface, and a transcribing step of fabricating the prepared slide by transcribing the section floated on the liquid surface onto the base plate,
wherein a necessary number of sections is cut out from the selected embedded block, thereafter the selected embedded block is returned to the store house, and a successively selected embedded block is taken out from the store house and carried to the cutting position.

According to the automatic instrument for fabricating prepared slides of tissue section and the automatic prepared slide fabricating method according to the invention, first, the plurality of embedded blocks are previously stored to the store house to be able to put in and out the embedded blocks. The control portion carries out the first carrying step of carrying the selected one of the embedded block to the cut position from the plurality of stored embedded blocks by controlling the first carrying means. Further, the cutting means carries out the cutting step of fabricating the section by cutting (sectioning) the carried embedded block in the shape of the sheet by a predetermined thickness (for example, as extremely thin as 5 µm). The second carrying means carries out the second carrying step of carrying the cut section to the storage tank stored with a liquid of water or the like and floating the section on the water surface (liquid surface).

Thereby, the section is brought into a state of being elongated by removing wrinkle or roundness in cutting. After having been elongated, the transcribing means carries out the transcribing step of transcribing to fix the section floated on the water surface onto the base plate of slide glass or the like. As a result, the prepared slide fixed with the section on the base plate can be fabricated.

Particularly, the control portion controls to return the embedded block again to the store house by operating the first carrying means after cutting out a necessary number of sheets of the sections from one embedded block by the cutting means and controls the first carrying means to carry a successively selected embedded block to the cut position. That is, after returning the first embedded block to the store house, the first carrying step is repeated again to the successive embeddedblock. Thereby, the cutting means can cut out the necessary number of sheets of the section from the plurality of embedded blocks successively without being interrupted.

Further, by repeating the above-described respective steps, the prepared slides can automatically be fabricated by cutting out the necessary number of sheets of the sections from the respective embedded blocks while pertinently interchanging all of the embedded blocks stored to the store house without being operated manually.

In this way, according to the automatic instrument for fabricating prepared slide of tissue section and the automatic prepared slide fabricating method of the invention, the prepared slide can be fabricated while automatically interchanging the embedded blocks, which has applied a considerable burden on the operator and therefore, the burden on the operator can be alleviated and occurrence of the human error can be reduced. Particularly, the embedded blocks have been frequently interchanged and therefore, the burden on the operator can significantly be alleviated.

Further, according to the invention, there is provided the automatic instrument for fabricating prepared slide of tissue section, wherein the store house includes a plurality of storage shelves for respectively classifying to store the plurality of embedded blocks, and the control portion controls the transcribing means to contain the prepared slide fabricated from the embedded block to a designated position corresponding to the storage shelf in which the embedded block has been stored in the above-described automatic instrument for fabricating prepared slide of tissue section of the invention.

Further, according to the invention, there is provided the automatic prepared slide fabricating method, wherein a plurality of the embedded blocks are stored in storage shelves provided to the store house in a state of being respectively classified, further comprising a containing step of containing the prepared slide fabricated from the embedded block to a designated position corresponding to the storage shelf in which the embedded block has been stored after the transcribing step in the above-described automatic prepared slide fabricating method of the invention.

According to the automatic instrument for fabricating prepared slide of tissue section and the automatic prepared slide fabricating method according to the invention, the plurality of embedded blocks are stored to the plurality of storage shelves provided to the store house previously in the state of being classified respectively. Under the state, at the first carrying step, the first carrying means takes out the embedded blocks stored to any selected one of the storage shelves to transmit to the cut position. Thereafter, the section is fabricated by transcribing the section cut out from the embedded block onto the base plate by the cutting means, the first carrying means, the second carrying means and the transcribing means.

At this occasion, the control portion controls the transcribing means to store the fabricated sliced sample to a designated position corresponding to the storage shelf in which the original embedded block has been stored. In accordance therewith, the transcribing means carries out the containing step of containing the sliced sample to the designated position successively after fabricating the sliced sample. Thereby, all of the automatically fabricated plurality of sheets of prepared slides are brought into a state of being corresponded to and stored to the original embedded blocks. Therefore, the operator can easily and firmly check from which embedded blocks the automatically fabricated plurality of sheets of sliced samples are fabricated and can carry out highly accurate quality control. The burden on the operator can be alleviated also therefrom.

Further, according to the invention, there is provided the automatic instrument for fabricating prepared slide of tissue section, wherein the transcribing means includes a plurality of containing shelves to constitute the designated positions, and the control portion includes a memory portion for correlating to store information of positions of the plurality of storage shelves and information of positions of the plurality of containing shelves in the above-described automatic instrument for fabricating prepared slide of tissue section of the invention.

According to the automatic instrument for fabricating prepared slide of tissue section according to the invention, the transcribing means includes the exclusive containing shelves for containing the fabricated prepared slides. Further, since the control portion includes the memory portion, when the embedded block is taken out from any of the containing shelves by controlling the first carrying means, a position of the containing shelf in correspondence with the storage shelf can accurately and swiftly be determined. Further, the control portion controls the transcribing means to contain the prepared slide to the determined containing shelf. As a result, the operator can firmly check the embedded block and the prepared slide by only confirming the containing shelf. Further, since the finished sliced samples are contained at the exclusive containing shelves and therefore, thereafter, the slices samples are easy to be handled.

Further, according to the invention, there is provided the automatic instrument for fabricating prepared slide of tissue section, wherein the control portion is connected with an input portion capable of previously inputting a predetermined condition in fabricating the prepared slide for controlling the respective means to fabricate the prepared slide based on the predetermined condition inputted to the input portion in the above-described automatic section fabricating apparatus of the invention.

According to the automatic section fabricating apparatus according to the invention, before fabricating the prepared slide, the operator can previously input various predetermined conditions in fabricating the prepared slide. For example, a condition of how many sheets of the sliced samples are fabricated from one embedded block, or in what order the plurality of embedded blocks stored to the store house are carried to the cut position or the like can arbitrarily be inputted.

Further, the control portion generally controls the respective means to fabricate the prepared slide based on the inputted predetermined condition. Therefore, the prepared slide can be fabricated as being aimed by the operator and the operability is promoted and the apparatus is facilitated to be used.

Further, according to the invention, there is provided the automatic instrument for fabricating prepared slide of tissue section, wherein the store house includes a rotating member provided with a plurality of the storage shelves on an outer peripheral face thereof, mounted on a rotatable shaft and controlled to rotate by the control portion in any of the above-described automatic instrument for fabricating prepared slide of tissue section of the invention.

According to the automatic instrument for fabricating prepared slide of tissue section according to the invention, by rotating the rotating member around the rotating shaft in putting the embedded block stored to any of the storage shelves thereto and therefrom by the first carrying means, the plurality of storage shelves provided on the outer peripheral face can be directed successively to the side of the first carrying means. In this way, by providing the storage shelves at the outer peripheral face of the rotating member, a number of the plurality of storage shelves can efficiently be provided in a narrow installation space. Therefore, a total of the apparatus can be downsized. Further, a movable range of the first carrying means in putting in and out the embedded block can be restrained as small as possible. The total can be downsized and the constitution can be simplified also therefrom.

According to the automatic instrument for fabricating prepared slide of tissue section and the automatic prepared slide fabricating method according to the invention, the prepared slide can be fabricated while automatically interchanging the embedded blocks and therefore, the burden on the operator can be alleviated and occurrence of the human error can be reduced. Particularly, the embedded block has been interchanged frequently and therefore, the burden on the operator is significantly alleviated.

Embodiments of the present invention will now be described by way of further example only and with reference to the accompanying drawings, in which:
Fig. 1 is a constitution block diagram showing an embodiment of an automatic instrument for fabricating prepared slide of tissue section according to the invention;
Fig. 2 is a perspective view of a cassette and an embedded block stored to a storage shelf shown in Fig. 1;
Fig. 3 is a side view of a store house and a block handling robot shown in Fig. 1;
Fig. 4 is a top view of the store house and the block handling robot shown in Fig. 3;
Fig. 5 is a side view of a machining mechanism, a section carrying mechanism and an elongating mechanism shown in Fig. 1;
Fig. 6 is a side view of a slide glass handling robot shown in Fig. 1; and
Fig. 7 is a view showing other example of the elongating mechanism shown in Fig. 1, showing an elongating mechanism capable of elongating by elongation by water, elongation by hot water, and a hot plate.

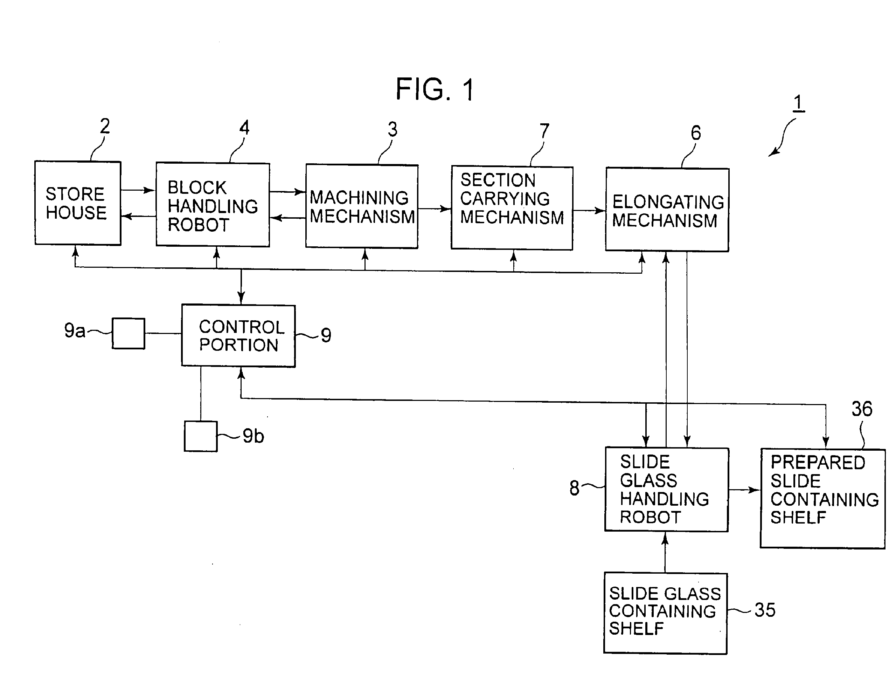

An embodiment of an automatic instrument for fabricating a prepared slide of tissue section and an automatic prepared slide fabricating method according to the invention will be explained with reference to Fig. 1 through Fig. 6 as follows. In this embodiment, explanation is made using a living body tissue collected from an experimental animal such as a rat and a mouse as an example of a living body sample.

As shown by Fig. 1, an automatic instrument for fabricating prepared slide of tissue section 1 of the embodiment includes a store house 2 for storing a plurality of embedded blocks B embedded with a living body tissue S by an embedding medium to be able to put in and out thereto and therefrom, a machining mechanism (cutting means) 3 for cutting the embedded block B by a predetermined thickness to cut out a section B1 in a sheet-like shape, a block handling robot (first carrying means) 4 capable of putting a selected one of the embedded blocks B to and from the store house 2 to be carried to a cut position P cut by the machining mechanism 3, a section carrying mechanism (second carrying means) 7 for carrying the section B1 cut out by the machining mechanism 3 to an elongating mechanism 6 comprising a water tank (storage tank) 5 stored with water (liquid) W1 to be floated on a water surface (liquid surface), a slide glass handling robot (transcribing means) 8 for transcribing the section B1 floated on the water surface onto slide glass (baseplate) G to thereby fabricate a prepared slide H, and a control portion 9 for generally controlling the respective constituent members.

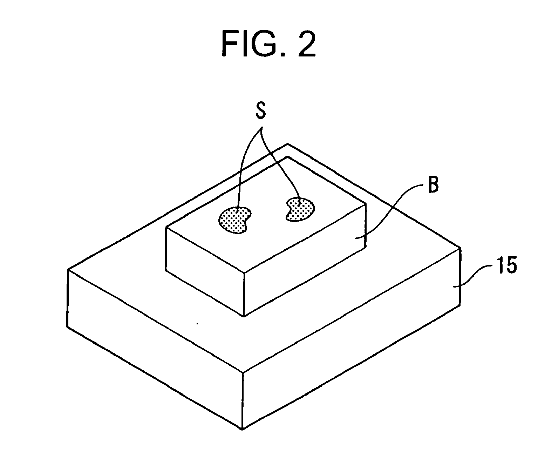

As shown by Fig. 2, the embedded block B is constituted by subjecting moisture at inside of the living body tissue S fixed by formalin to paraffin substitution and hardening a surrounding thereof in a block shape by an embedding medium of paraffin or the like. Thereby, there is brought about a state in which the living body tissue S is embedded into paraffin. Further, the embedded block B is mounted to be fixed on a cassette 15 formed in a box-like shape.

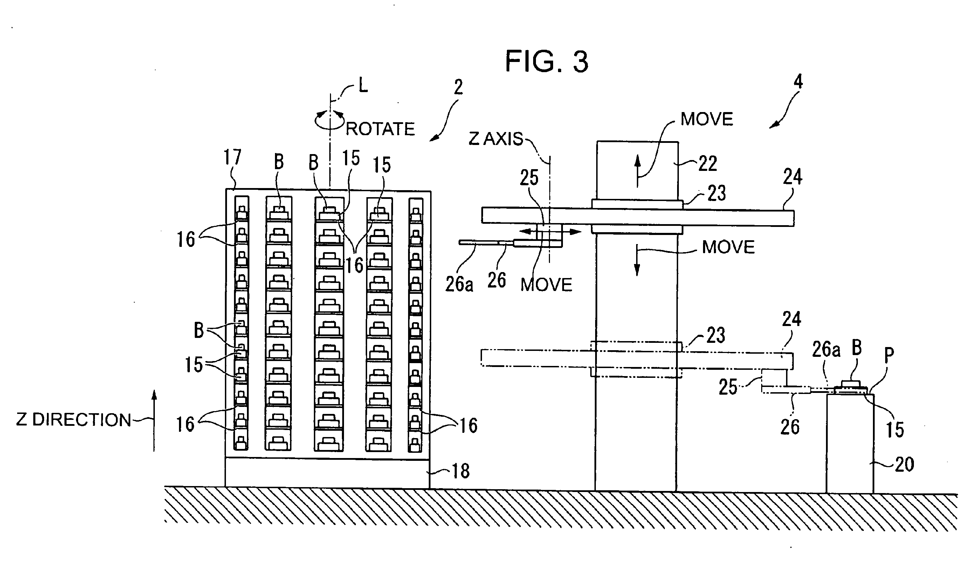

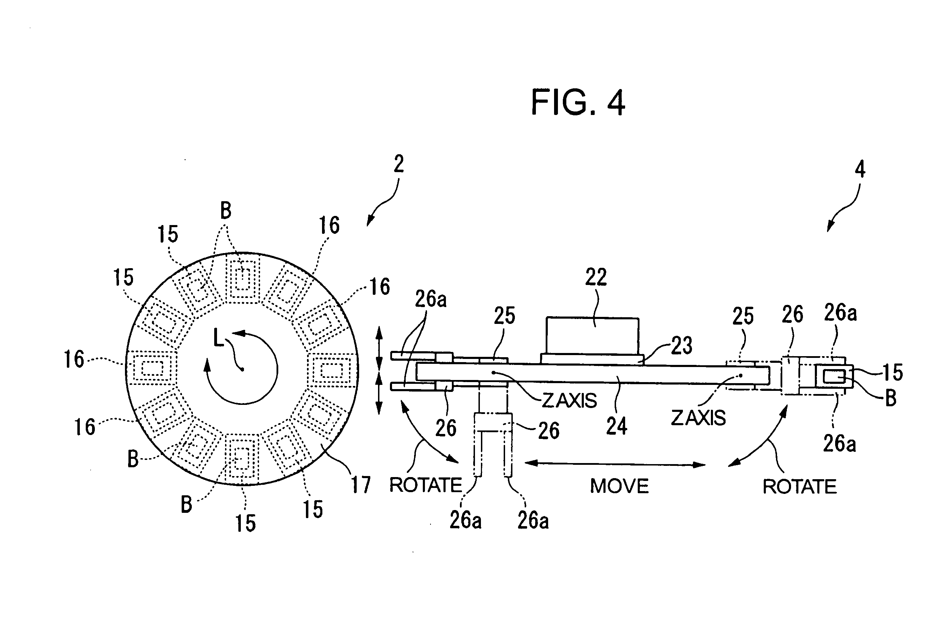

As shown by Fig. 3 and Fig. 4, the store house 2 includes a plurality of storage shelves 16 for respectively classifying to store a plurality of the embedded blocks B fixed onto the cassettes 15, and a rotating member 17 provided with a plurality of storage shelves 16 on an outer periphery face thereof, rotatable centering on a rotating shaft L and controlled to be rotated by the control portion 9.

The rotating member 17 according to the embodiment is formed in a shape of a circular column centering on the rotating shaft L and is fixed onto a rotating stage 18 rotated by a drive source of a motor or the like, not illustrated. Further, the control portion 9 controls to operate the drive source. Thereby, the rotating member 17 is controlled by the control portion 9 to rotate in an arbitrary rotational direction and by an arbitrary rotational speed.

Further, the storage shelves 16 are uniformly arranged on the outer peripheral face of the rotating member 17 and formed by a total of, for example, 120 pieces. That is, 10 pieces thereof are formed at predetermined intervals in Z direction constituting a direction of the rotating shaft L and 12 columns thereof are formed at respective 30 degrees centering on the rotating shaft L by constituting one column by 10 pieces thereof.

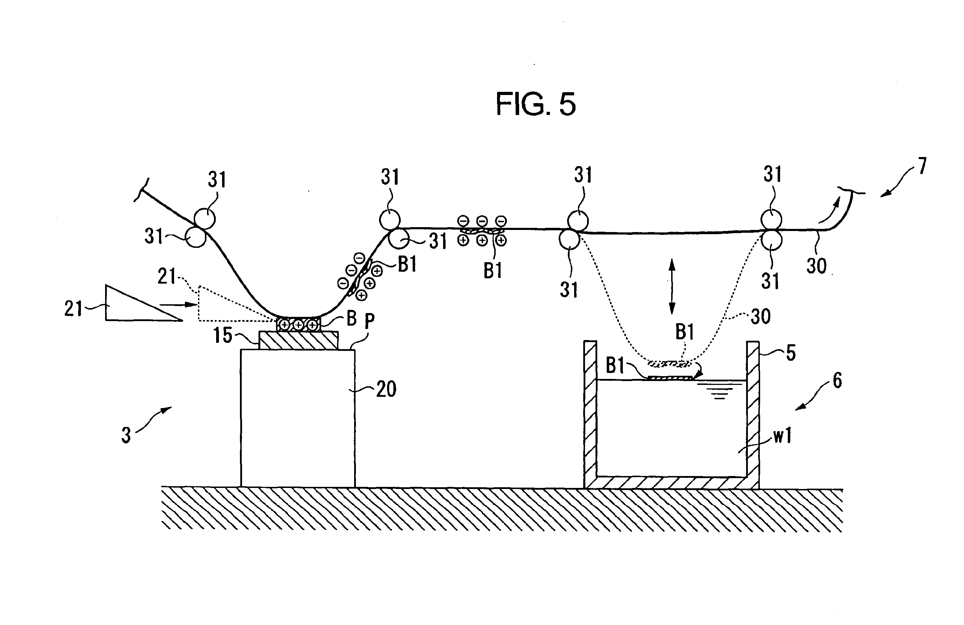

As shown by Fig. 5, the machining mechanism 3 includes a block fixing base 20 for mounting to fix the embedded block B by way of the cassette 15 at a position of being remote from the store house 2 by a constant distance, and a cut blade 21 operated to slide to the embedded block B mounted to be fixed on the block fixing base 20.

The cut blade 21 is operated to slide by predetermined speed, draw angle and rake angle by a drive mechanism, not illustrated. Further, the block fixing base 20 lifts the embedded block B from a cutting face by a predetermined amount in accordance with operation of sliding the cut blade 21. Thereby, the embedded block B is cut by a predetermined thickness by the cut blade 21 to cut out the section B1. That is, an upper face of the block fixing base 20 constitutes the cut position P. Further, the embedded block B fixed to be mounted on the block fixing base 20 is applied with plus charge by a charging apparatus, not illustrated.

Further, although according to the embodiment, there is constructed a constitution of cutting the embedded block B by operating to slide the cut blade 21 relative to the block fixing base 20, the embodiment is not limited to the case. For example, the cutting mechanism 3 may be constituted to cut the embedded block B by, for example, fixing the cut blade 21 and moving the block fixing base 20 to the fixed cut blade 21. Further, the machining mechanism 3 may be constituted to cut the embedded block B by relatively moving both of the cut blade 21 and the block fixing base 20.

Further, as shown by Fig. 3 and Fig. 4, a Z axis guide rail 22 extended in Z direction is attached between the store house 2 and the block fixing base 20. The Z axis guide rail 22 is attached with a lift stage 23 movable along the Z axis guide rail 22. The lift stage 23 is attached with a horizontal guide rail 24 extended in a horizontal direction. Further, the horizontal guide rail 24 is attached with a horizontal stage 25 movable along the horizontal guide rail 24 similar to the Z axis guide rail 22. Further, the horizontal stage 25 is not simply made to move in the horizontal direction but is made to be rotatable around the Z axis as shown by Fig. 4.

Further, the horizontal stage 25 is attached with a grab robot 26 having a pair of arms 26a arranged in parallel with each other in a state of being remote from each other by a constant distance capable of adjusting a distance therebetween to be proximate to or remote from each other. Further, by respectively pertinently operating the lift stage 23, the horizontal stage 25 and the grab robot 26, any of the embedded blocks B contained at the storage shelves 16 of the store house 2 can be put in and out to and from the storage shelves 16.

That is, the storage block B can be put in and out to and from the storage shelves 16 by operating the horizontal stage 25 and the lift stage 23 in a state of grabbing the cassette 15 mounted with the embedded block B by the pair of arms 26a. Further, the embedded block B can be mounted on the block fixing base 20 constituting the cut position P by pertinently operating the lift stage 23, the horizontal stage 25 while grabbing the embedded block B. Further, the lift stage 23, the horizontal stage 25 and the grab robot 26 are driven by a motor, not illustrated, controlled by the control portion 9.

The Z axis guide rail 22, the lift stage 23, the horizontal guide rail 24, the horizontal stage 25 and the grab robot 26 mentioned above constitute the block handling robot 4.

Further, as shown by Fig. 5, the water tank 5 is provided contiguous to the block fixing base 20. The water tank 5 is a portion constituting the elongating mechanism 6 for elongating a section B1 cut out by the machining mechanism 3 by utilizing a surface tension.

A carrier tape 30 previously charged with minus charge by a charging apparatus, not illustrated, is provided above the block fixing base 20 and the water tank 5. The carrier tape 30 is fed in a direction from the block fixing base 20 to the water tank 5 by a guide roller 31 and a tape drive mechanism, not illustrated.

At this occasion, the carrier tape 30 is slacked to be brought into face contact with the embedded block B mounted to be fixed on the block fixing base 20 and to be brought into contact with the surface of the water W1 stored in the water tank 5 when the carrier tape 30 reaches above the water tank 5.

Thereby, the section B1 cut out by the machining mechanism 3 is adsorbed to a lower face of the carrier tape 30 by static electricity, and carried to the water tank 5 in accordance with movement of the carrier tape 30 in the adsorbed state. Further, the section B1 is brought into a state of being floated on the water W1 by being separated from the carrier tape 30 by dipping to the water W1 by slacking the carrier tape 30 at a time point of reaching the water tank 5.

The carrier tape 30, the guide roller 31 and the tape drive mechanism constitute the section carrying mechanism 7.

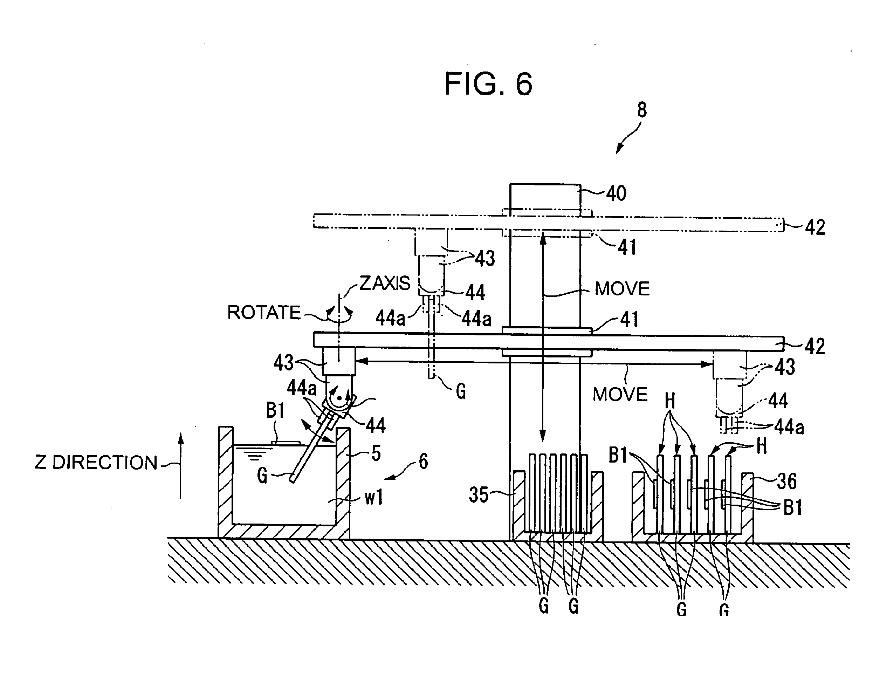

Further, as shown by Fig. 6, slide glass containing shelves 35 for previously containing a plurality of sheets of unused slide glass G, prepared slide containing shelves (containing shelves) 36 for containing a plurality of sheets of sliced samples H constituted by transcribing the section B1 on the slide glass G are provided in this order contiguously to the water tank 5.

The prepared slide containing shelves 36 constitute designated positions for respectively containing the prepared slides H fabricated from the embedded blocks B respectively contained at the plurality of storage shelves 16 in a state of being corresponded to the respective embedded blocks B.

Further, a Z axis guide rail 40 extended in Z direction is attached between the water tank 5 and the slide glass containing shelves 35 similar to the block handling robot 4. The Z axis guide rail 40 is attached with a lift stage 41 movable along the Z axis guide rail 40. The lift stage 41 is attached with a horizontal guide rail 42 extended in the horizontal direction. Further, the horizontal guide rail 42 is attached with a horizontal stage 43 movable along the horizontal guide rail 42. The horizontal stage 43 is not only movable in the horizontal direction but also rotatable around the Z axis. Further, the horizontal stage 43 is attached with a slide glass grab robot 44 in a state of being rotatable around an axis orthogonal to Z direction. The slid glass grab robot 44 includes a pair of arms 44a arranged in parallel with each other in a state of being remote from each other by a constant distance and capable of adjusting to be proximate to each other and remote from each other by increasing or reducing a distance therebetween.

Further, by respectively pertinently operating the lift stage 41, the horizontal stage 43 and the slide glass grab robot 44, the unused slide glass G can be grabbed and can fabricate the prepared slide H by transcribing the section B1 floating in the water tank 5 onto the grabbed sliced glass G. Further, the fabricated prepared slides H can be contained in the prepared slide containing shelves 36. A detailed explanation will be given thereof later.

The Z axis guide rail 40, the lift stage 41, the horizontal guide rail 42, the horizontal stage 43 and the slide glass grab robot 44 constitute the slide glass handling robot 8.

The control portion 9 controls the slide glass handling robot 8 to contain the prepared slides H fabricated from the embedded block B to the prepared slide containing shelves 36 made to correspond to the storage shelves 16 storing the embedded block B. That is, in correspondence with the storage shelves 16 mounted with the embedded blocks B, the prepared slides H fabricated from the embedded blocks B are contained in the prepared slide containing shelves 36.

Specifically, as shown by Fig. 1, the control portion 9 includes a memory portion 9a for correlating to store position information of the plurality of storage shelves 16 and position information of the plurality of prepared slide containing shelves 36. Thereby, even when the embedded blocks B contained in the storage shelves 16 are randomly put out, the prepared slides H fabricated from the embedded blocks B can firmly be contained to the prepared slide containing shelves 36 corresponding to the storage shelves 16 while being classified.

Further, the control portion 9 is connected with an input portion 9b by which the operator can previously input a predetermined condition in fabricating the prepared slide H. Further, the control portion 9'controls respective constituent members (respective means) to fabricate the prepared slide H based on the predetermined condition previously inputted by way of the input portion 9b.

Next, an explanation will be given as follows of an automatic prepared slide fabricating method for respectively fabricating several sheets of the prepared slide H from the plurality of embedded blocks B by the automatic instrument for fabricating prepared slide of tissue section 1 constituted in this way.

The automatic prepared slide fabricating method of the embodiment includes a first carrying step of putting out a selected one of the embedded blocks B stored by the plurality of storage shelves 16 provided by the store house 2 in a state of being previously classified respectively to be carried out the cut position P, a cutting step of cutting out the section B1 by cutting the embedded block B carried to the cut position P by a predetermined thickness, a second carrying step of carrying the cut section B1 to the water tank 5 stored with water W1 to be floated on the water surface, and a transcribing step of fabricating the prepared slide H by transcribing the section B1 floated on the water surface onto the slide glass G, and is constituted by step of repeating the first carrying step of cutting out necessary number of sheets of the sections B1 from the embedded block B, thereafter, returning the embedded block B to the store house 2, putting out the successively selected embedded block B from the store house 2 to be carried again to the cut position P.

Further, the automatic prepared slide fabricating method of the embodiment includes a containing step of containing the prepared slides H fabricated from the embedded blocks B to containing positions corresponding to the storage shelves 16 stored with the embedded blocks B, that is, the prepared slide containing shelves 36 after the transcribing step in addition to the respective steps. The above-described respective steps will be explained in details as follows.

First, the operator previously stores the cassettes 15 mounted with the respectively different embedded blocks B (for example, all of which is constituted by a living body tissue of a mouse having different portions) to the storage shelves 16 of the store house 2. Further, the unused slide glass G is contained in the slide glass containing shelves 35. Next, the operator previously inputs various predetermined conditions in fabricating the prepared slide H, for example, an order for putting out the embedded blocks B, a number of sheets of the sections B1 cut out from one embedded block B and the like to the input portion 9b.

After finishing an initial setting, the control portion 9 controls to operate the respective constituent members based on the predetermined conditions inputted to the input portion 9b.

First, the control portion 9 carries out the first carrying step of putting out the selected first embedded block B from the plurality of stored embedded blocks B to be carried onto the block fixing base 20 constituting the cut position P by controlling the block handling robot 4. That is, by pertinently operating the lift stage 23 and the horizontal stage 25 of the block handling robot 4, the pair of arms 26a of the grab robot 26 are inserted to the storage shelves 16. At this occasion, the control portion 9 controls to direct the first embedded block B to a side of the block handling robot 4 by pertinently rotating the rotating stage 18 simultaneously.

Next, the pair of arms 26a are operated to be proximate to each other to squeeze the cassette 15 mounted with the embedded block B to be fixed. Next, the cassette 15 is carried onto the block fixing base 20 as shown by Fig. 3 by pertinently operating the lift stage 23 and the horizontal stage 25 again while squeezing the cassette 15 to mount the cassette 15 onto the block fixing base 20.

Further, the control portion 9 is stored with position information of the storage shelves 16 from which the embedded block B is taken out at the memory portion 9a. The memory portion 9a is correlated to be stored with position information of the storage shelves 16 and position information of the prepared slide containing shelves 36 and therefore, the positions of the prepared slide containing shelves 36 in correspondence with the storage shelves 16 can accurately and swiftly be determined based on the currently inputted position information of the storage shelves 16. Further, the control portion 9 controls the slide glass handling robot 8 to contain the prepared slides H fabricated from the embedded blocks B later to the determined prepared slide containing shelves 36.

As shown by Fig. 5, by the first carrying step, the embedded block B mounted to be fixed on the block fixing base 20 is brought into face contact with the carrier tape 30 applied with minus charge. Further, simultaneously therewith, the embedded block B is cut in a sheet-like shape by a predetermined thickness (for example, as extremely thin as 5 µm) by the cut blade 21 operated to slide by predetermined speed, draw angle and rake angle by the machining mechanism 3. By the cutting step, the section B1 is cut out from the embedded block B. At this occasion, the embedded block B is applied with plus charge by a charging apparatus at a time point of being mounted onto the block fixing base 20 and therefore, the section B1 is adsorbed to the lower face of the carrier tape 30 by static electricity simultaneously with being cut out.

Further, the adsorbed section B1 is carried to the water tank 5 along with the carrier tape 30 moved by a taper drive mechanism. When the carrier tape 30 is moved to above the water tank 5, the carrier tape 30 is slacked to the water tank 5 to be dipped into water W1 stored in the water tank 5. Therefore, the carried section B1 is dipped into water W1 along with the carrier tape 30 and therefore,the section B1 is brought into a state of being floated on the water surface by being released from adsorption. Further, by floating the section B1 on the water surface by a constant period of time, wrinkle or roundness brought about in cutting is removed by the surface tension, and the section B1 is brought into an elongated state. In this way, the section B1 is carried to the water tank 5 to be brought into a state of finishing to be elongated by the second carrying step.

On the other hand, as shown by Fig. 6, in accordance with cutting out and carrying the section B1, the slide glass handling robot 8 takes out one sheet of unused slide glass G from the slide glass containing shelves 35 by pertinently operating the lift stage 41, the horizontal stage 43 and the slide glass grab robot 44 to be at standby above the water tank 5.

That is, first, the pair of arms 44a of the slide glass grab robot 44 are inserted to the slide glass containing shelves 35 by pertinently operating the lift stage 41, the horizontal stage 43 and the slide glass grab robot 44. Next, one sheet of the unused slide glass G is squeezed to be fixed by operating the pair of arms 44a to be proximate to each other. Further, the slide glass G is drawn out by pertinently operating the lift stage 41, the horizontal stage 43 and the slide glass grab robot 44 again while squeezing the slide glass G to be moved to above the water tank 5. Further, the slide glass G is at standby while staying in the state until the section B1 is carried to the water tank 5.

Further, after an elapse of the state in which the section B1 is carried into the water tank 5 by the carrier tape 30 by the second carrying step and is floated on the water surface by a constant period of time, the slide glass handling robot 8 scoops up the section B1 floated on the water surface by using the grabbed slide glass G by pertinently operating the lift stage 41, the horizontal stage 43 and the slide glass grab robot 44. Thereby, the section B1 is brought into a state of being transcribed onto the slide glass G. As a result of the transcribing step, the prepared slide H is fabricated.

Further, the slide glass handling robot 8 carries out a containing step of putting the fabricated prepared slides H to the prepared slide containing shelves 36 to be contained thereby. At this occasion, the slide glass handling robot 8 contains the fabricated prepared slides H into the prepared slide containing shelves 36 corresponding to the storage shelves 16 stored with the embedded block B by being instructed by the control portion 9. Thereby, the embedded block B and the prepared slide H fabricated from the embedded block B are brought into a state of being firmly corresponded to each other.

Further, the control portion 9 fabricates the prepared slides H by cutting out several sheets of the section B1 from one embedded block B by repeating the respective steps based on the previously inputted predetermined conditions to the input portion 9b. Further, several sheets of the sliced samples H fabricated from the one developed embedded block B are stored to the prepared slide containing shelves 36 made to be corresponded to the containing shelves storing the embedded block B as mentioned above.

Next, the control portion 9 controls the used embedded block B to return again to the store house 2 by operating the block handling robot 4 after cutting a necessary number of sheets of the sections B1 from one embedded block B based on the previously inputted predetermined conditions to the input portion 9b and successively controls the block handling robot 4 to carry the next selected embedded block B to the cut position P. Thereby, the necessary numbers of sheets of the sliced block B1 can be cut out from the plurality of embedded blocks B successively without being interrupted.

The prepared slides H fabricated from the subsequently selected embedded block B are stored in the subsequent slide glass containing shelf corresponding to the storage shelf 16 where the embedded block B had been stored.

Further, by repeating the respective steps, the prepared slides H can be fabricated automatically by cutting out the necessary numbers of sheets of the section B1 from the respective embedded blocks B by repeating the above-described respective steps while pertinently interchanging all of the embedded blocks B stored to the store house 2 without being operated manually.

In this way, according to the automatic sliced sample fabricating apparatus 1 of the embodiment, prepared slides H can automatically be fabricated based on the predetermined conditions previously inputted to the input portion 9b while automatically interchanging the embedded blocks B, which has previously applied a considerable burden on the operator and therefore, the burden on the operator can be alleviated, and occurrence of the human error can be reduced. Particularly, interchanging the embedded blocks B has been an operation carried out frequently in the background art and therefore, the burden on the operator is significantly alleviated.

Particularly, according to an automatic prepared slide fabricating method using the automatic instrument for fabricating prepared slide of tissue section 1 of the embodiment, the control portion 9 controls the slide glass handling robot 8 to store the fabricated prepared slides H to designated position corresponding to the storage shelves 16 stored with the original embedded blocks B. That is, the fabricated prepared slides H can firmly be stored at the section containing shelves 36 corresponding to the storage shelves 16. Therefore, the operator can easily and firmly check from which embedded blocks B the sliced samples H successively fabricated automatically are fabricated by only confirming the prepared slide containing shelves 36 and highly accurate quality control can be carried out. The burden on the operator can be alleviated also therefrom.

Further, the finished prepared slides H are contained in the exclusive containing shelves (prepared slide containing shelves 36) and therefore, thereafter, the prepared slides H are easy to be handled.

Further, when the embedded block B stored in any of the storage shelves 16 is put in and out thereto and therefrom by the block handling robot 4, by rotating the rotating member 17 around the rotating shaft L, the plurality of storage shelves 16 on the outer peripheral face can successively be directed to a side of the block handling robot 4. In this way, since the storage shelves 16 are provided at the outer peripheral face of the rotating member 17, a number of the plurality of storage shelves 16 can efficiently be provided in a narrow installing space. Therefore, a total of the apparatus can be downsized.

Further, a movable range of the block handling robot 4 in putting in and out the embedded block B can be restrained as little as possible. The apparatus can be downsized and the constitution can be simplified also therefrom.

Further, the technical range of the invention is not limited to the above-described embodiment but can variously be modified within the range not deviated from the gist of the invention.

For example, although according to the embodiment, an explanation has been given by constituting the rotating member in the shape of the circular column, the embodiment is not limited to the shape but the rotating member may be formed by a shape of a square column, or may be formed by a polygonal shape. Further, the store house having the plurality of storage shelves may simply be constituted without providing the rotating member. However, it is preferable to provide the rotating member as in the embodiment in view of downsizing the apparatus.

Further, although the first carrying means and the transcribing means are respectively constituted as the block handling robot and the slide glass handling robot, the means are not limited to the robots. Further, although the second carrying means is constituted to adsorb the section to the carrier tape by utilizing static electricity and carries the section by the carrier tape, the second carrying means is not limited to the constitution.

Further, although according to the embodiment, the designated positions made to correspond to the storage shelves are constituted by the prepared slide containing shelves, the embodiment is not limited to the case. For example, the respective storage shelves may widely be formed and the prepared slides fabricated from the embedded blocks stored to the respective storage shelves may simultaneously be contained in the storage shelves to align with the embedded blocks. At any rate, the designated positions may be provided such that the embedded blocks and the prepared slides fabricated from the embedded blocks can easily be checked later.

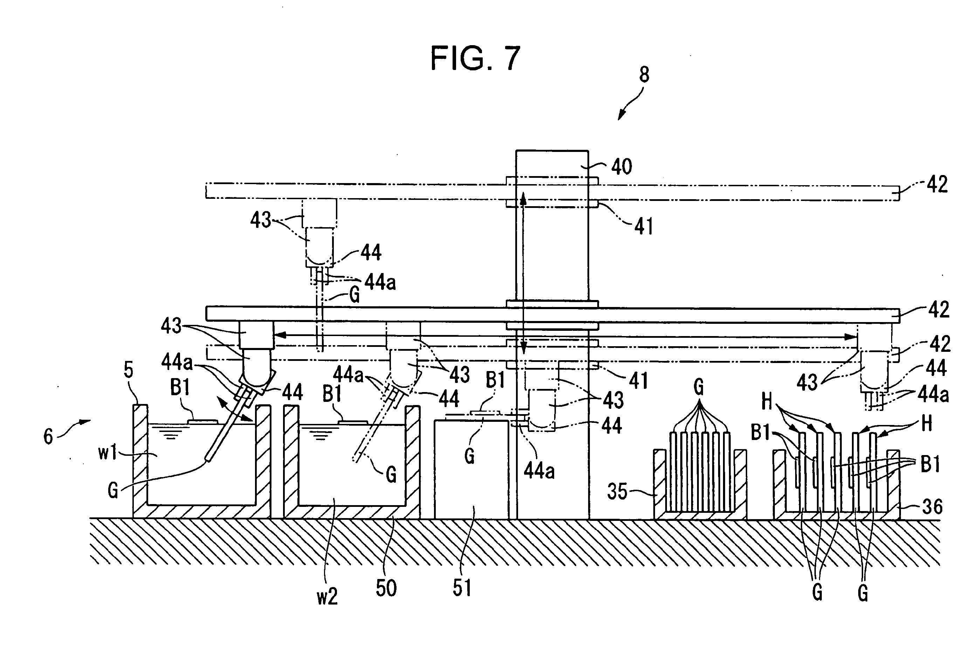

Further, although according to the embodiment, the elongating mechanism is constituted to only provide the water tank storing water, the embodiment is not limited thereto. For example, as shown by Fig. 7, there may be constituted the elongating mechanism 6 provided with a second water tank 50 for storing hot water W2 and/or a hot plate 51 contiguous to the water tank 5.

In this case, after mounting the section B1 finished with elongation by water is mounted on the slide glass G, thereafter, the section B1 is carried to the second water tank 50 and is floated on hot water (liquid) W2 by the slide glass handling robot 8. By elongation by hot water, the section B1 is facilitated to be elongated and therefore, remaining wrinkle or roundness which cannot be removed by elongation by water W1 can be removed. Therefore, the prepared slide H having higher quality can be fabricated. Further, in this case, the second carrying step is constituted until floating the section B1 on hot water W2.

Further, after elongation by hot water, by mounting the slide glass G mounted with the section B1 on the hot plate 51, the section B1 can further be heated through the slide glass G. Thereby, wrinkle or roundness which cannot be removed by elongation by hot water can further be removed.

In this way, the prepared slide H having higher quality can be provided by providing the second water tank 50 and the hot plate 51 and therefore, the constitution is further preferable.

The aforegoing description has been given by way of example only and it will be appreciated by a person skilled in the art that modifications can be made without departing from the scope of the present invention.

## Claims

1. An automatic instrument for fabricating prepared slide of tissue section comprising:
a store house for storing a plurality of embedded blocks embedded with a living body sample by an embedding medium to be able to put in and out thereto and therefrom;
cutting means for cutting out a section in a shape of a sheet by cutting the embedded block by a predetermined thickness;
first carrying means capable of putting in a selected one of the embedded blocks in the plurality of stored embedded blocks to and from the store house and carrying the selected one of the embedded block to a position of being cut by the cutting means;
second carrying means for carrying the section to a storage tank stored with a liquid and floating the section on a liquid surface;
transcribing means for fabricating a prepared slide by transcribing the section floated on the liquid surfaced onto a base plate; and
a control portion for controlling the first carrying means to cut out a necessary number of the sections from the embedded block by the cutting means, thereafter, return the embedded block to the store house, take out a successively selected one of the embedded block from the store house and carry the selected embedded block to the cut position.

2. The automatic instrument for fabricating prepared slide of tissue section according to Claim 1, wherein the store house includes a plurality of storage shelves for respectively classifying to store the plurality of embedded blocks; and
wherein the control portion controls the transcribing means to contain the prepared slide fabricated from the embedded block to a designated position corresponding to the storage shelf in which the embedded block has been stored.

3. The automatic instrument for fabricating prepared slide of tissue section according to Claim 2, wherein the transcribing means includes a plurality of containing shelves to constitute the designated positions; and
wherein the control portion includes a memory portion for correlating to store information of positions of the plurality of storage shelves and information of positions of the plurality of containing shelves.

4. The automatic instrument for fabricating prepared slide of tissue section according to Claim 2 or 3, wherein the control portion is connected with an input portion capable of previously inputting a predetermined condition in fabricating the prepared slide for controlling the respective means to fabricate the prepared slide based on the predetermined condition inputted to the input portion.

5. The automatic instrument for fabricating prepared slide of tissue section according to any one of Claims 2 through 4, wherein the store house includes a rotating member provided with a plurality of the storage shelves on an outer peripheral face thereof, rotatable centering on a rotating shaft and controlled to rotate by the control portion.

6. An automatic section fabricating method which is an automatic prepared slide fabricating method for automatically fabricating a prepared slide by cutting out a section in a shape of a sheet from an embedded block embedded with a living body sample by an embedding medium and transcribing the section onto a base plate, the automatic prepared slide fabricating method comprising:
a first carrying step of taking out a selected embedded block from a plurality of embedded blocks previously stored by a store house to be able to put out and in the embedded blocks and carrying the selected embedded block to a cut position;
a cutting step of cutting out the section by cutting the embedded block carried to the cut position by a predetermined thickness;
a second carrying step for carrying the cut section to a storage tank stored with a liquid and floating the section on a liquid surface; and
a transcribing step of fabricating the prepared slide by transcribing the section floated on the liquid surface onto the base plate;
wherein the first carrying step is repeated to cut out a necessary number of sheets of the sections from the embedded block, thereafter, return the embedded block to the store house, successively, take out a successively selected one of the embedded blocks from the store house and carry the selected one of the embedded blocks to the cut position.

7. The automatic prepared slide fabricating method according to Claim 6, wherein the plurality of embedded blocks are stored in storage shelves provided to the store house in a state of being respectively classified, further comprising:
a containing step of containing the prepared slide fabricated from the embedded block to a designated position corresponding to the storage shelf in which the embedded block has been stored after the transcribing step.
